(19)

Europäisches
Patentamt

European
Patent Office

Office européen
des brevets

(11)  **EP 4 597 825 A1**

(12)  **EUROPEAN PATENT APPLICATION**
published in accordance with Art. 153(4) EPC

(43) Date of publication:
06.08.2025 Bulletin 2025/32

(21) Application number: 23872499.1

(22) Date of filing: 28.09.2023

(51) International Patent Classification (IPC):
**H02P 21/24** (2016.01) **H02P 27/08** (2006.01)

(52) Cooperative Patent Classification (CPC):
**H02P 21/24; H02P 27/08**

(86) International application number:
**PCT/JP2023/035337**

(87) International publication number:
**WO 2024/071277 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022157829**

(71) Applicant: **Fujitsu General Limited
Kawasaki-shi, Kanagawa 213-8502 (JP)**

(72) Inventors:
• **SAITO, Yuki
  Kawasaki-shi, Kanagawa 213-8502 (JP)**
• **OSADA, Yudai
  Kawasaki-shi, Kanagawa 213-8502 (JP)**
• **URAYAMA, Masaharu
  Kawasaki-shi, Kanagawa 213-8502 (JP)**
• **SUZUKI, Kantaro
  Kawasaki-shi, Kanagawa 213-8502 (JP)**

(74) Representative: **TBK
Bavariaring 4-6
80336 München (DE)**

(54)  **MOTOR CONTROL DEVICE**

(57)  [Object] There is provided a motor control device capable of realizing stable control of a motor.

[Solving Means] A motor control device according to an embodiment of the present invention includes: an inverter; a calculation unit; a speed estimation unit; and a current control unit. The inverter converts a direct current (DC) voltage supplied from a DC power source into an alternating current (AC) voltage and applies the AC voltage to a motor by PWM control. The calculation unit detects a bus current of the inverter using a resistor connected between the DC power source and the inverter and calculates, on the basis of the bus current, a motor current flowing through the motor at intervals of a predetermined control period. The speed estimation unit estimates a motor speed on the basis of a detection current that is a motor current detected by being calculated by the calculation unit. The current control unit includes an integrator that performs integral control at intervals of the predetermined control period, stops performing the integral control in a control period in which the detection current could not be detected, and controls the motor current such that the speed estimated by the speed estimation unit is a command speed.

FIG.1

EP 4 597 825 A1

## Description

Technical Field

The present invention relates to a motor control device that controls a motor.

Background Art

In the past, a motor control device that performs switching control of switching elements of an inverter circuit using a PWM (Pulse Width Modulation) method is known as a method of controlling a motor. Examples of the method of detecting a current flowing through the motor in such a motor control device include a current detection method using a shunt resistor.

For example, Patent Literature 1 discloses a motor control device including a control means that generates a control signal for performing the on/off control of a plurality of switching elements of an inverter circuit that generates a three-phase voltage on the basis of a bus current of the inverter circuit and provides the control signal to the inverter circuit. In this motor control device, a so-called one-shunt current detection method in which a two-phase current of the motor is detected using the on/off state of each switching element of the inverter circuit and the bus current detected by the shunt resistor and the current of the remaining one phase is estimated from the detected two-phase current is used.

However, in the one-shunt current detection method, there is a control period in which a current cannot be detected depending on the on/off state of the switching element. In such a case, control is performed using an estimated current in some cases.

Further, in the motor control device, integral control and proportional control are performed using an integrator and a proportioner in order to cause the motor to rotate at a predetermined speed.

For example, Patent Literature 2 discloses a motor control device that performs vector control of an electric motor by decomposing a current flowing through the electric motor into a d-axis current and a q-axis current. This motor control device includes a speed control unit and a current control unit. The speed control unit generates a current command value using an integrator and a proportioner to reduce the deviation of the motor speed. Further, the current control unit generates a voltage command value using the integrator and the proportioner to reduce the deviation of the current flowing through the motor.

Citation List

Patent Literature

Patent Literature 1: Japanese Patent Application Laid-open No. 2015-126555
Patent Literature 2: Japanese Patent Application Laid-open No. 2015-192497

Disclosure of Invention

Technical Problem

In such a motor control device, when integral control is performed using an estimated current, erroneous deviations accumulate and the control becomes unstable. In particular, when integral control is performed using an estimated current in the case where there are successive control periods in which a current cannot be detected, the control becomes significantly unstable.

In view of the circumstances as described above, it is an object of the present invention to provide a motor control device capable of realizing stable control of a motor even in the case where there is a control period in which a current cannot be detected.

Solution to Problem

A motor control device according to an embodiment of the present invention includes: an inverter; a calculation unit; a speed estimation unit; and a current control unit.

The inverter converts a direct current (DC) voltage supplied from a DC power source into an alternating current (AC) voltage and applies the AC voltage to a motor by PWM control.

The calculation unit detects a bus current of the inverter using a resistor connected between the DC power source and the inverter and calculates, on the basis of the bus current, a motor current flowing through the motor at intervals of a predetermined control period.

The speed estimation unit estimates a motor speed on the basis of a detection current that is a motor current detected by being calculated by the calculation unit.

The current control unit includes an integrator that performs integral control at intervals of the predetermined control period, stops performing the integral control in a control period in which the detection current could not be detected, and controls the motor current such that the speed estimated by the speed estimation unit is a command speed.

The motor control device stops, in a case where the detection current cannot be detected, the integral control of the integrator that performs the integral control on the basis of the detection current. This stops the integral control in the carrier where a current could not be detected, thereby preventing the control from becoming unstable and allowing the control of a motor to be stably performed.

The motor control device may further include an estimation unit that estimates the motor current flowing through the motor, and the current control unit may include a proportioner that performs proportional control at intervals of the predetermined control period, perform the proportional control on the basis of an estimated current estimated by the estimation unit in a control period in which the detection current could not be detected, and perform the proportional control and the integral control on the basis of the detection current in a control period in which the detection current could be detected.

The current control unit may determine a control amount of the integral control on the basis of current-undetectable-control-period information based on a control period in which the detection current could not be detected.

The current-undetectable-control-period information is a larger value as the number of control periods in which the detection current could not be detected increases in a predetermined section, and the current control unit may increase the control amount of the integral control as the current-undetectable-control-period information is a larger value.

The current control unit may determine the control amount of the integral control on the basis of a deviation between a control parameter input to the integrator in a control period in which the detection current could be detected and a control target value, the current-undetectable-control-period information, and an integral gain.

The control amount may have a predetermined upper limit value.

The predetermined section may be a section from a control period in which the detection current could be detected previously to a control period in which the detection current could be detected this time, and the current-undetectable-control-period information may be a value based on a control period in which the detection current could not be detected in the predetermined section.

The current-undetectable-control-period information may be a value based on a time of the control period in which the detection current could not be detected in the predetermined section.

The predetermined section may be a predetermined time with reference to a control period in which the detection current could be detected this time, and the current-undetectable-control-period information may be a value based on a ratio of the control period in which the detection current could not be detected in the predetermined section.

The current control unit may stop performing the integral control in a control period in which the detection current could not be detected in an overmodulation control region.

Advantageous Effects of Invention

According to the present invention, it is possible to realize stable control of a motor even in the case where there is a control period in which a current cannot be detected.

Brief Description of Drawings

[Fig. 1] Fig. 1 is a diagram showing a configuration example of a motor control device according to a first embodiment of the present invention.
[Fig. 2] Fig. 2 is a diagram schematically showing a control response when integral control is performed and stopped.
[Fig. 3] Fig. 3 is a diagram schematically showing a control method for the addition amount of an integral term.
[Fig. 4] Fig. 4 is a diagram showing a configuration example of a motor control device according to a second embodiment of the present invention.
[Fig. 5] Fig. 5 is a diagram showing a configuration example of a motor control device according to a third embodiment of the present invention.

Mode(s) for Carrying Out the Invention

Embodiments of the present invention will be described below with reference to the drawings.

<First embodiment>

[Motor control device]

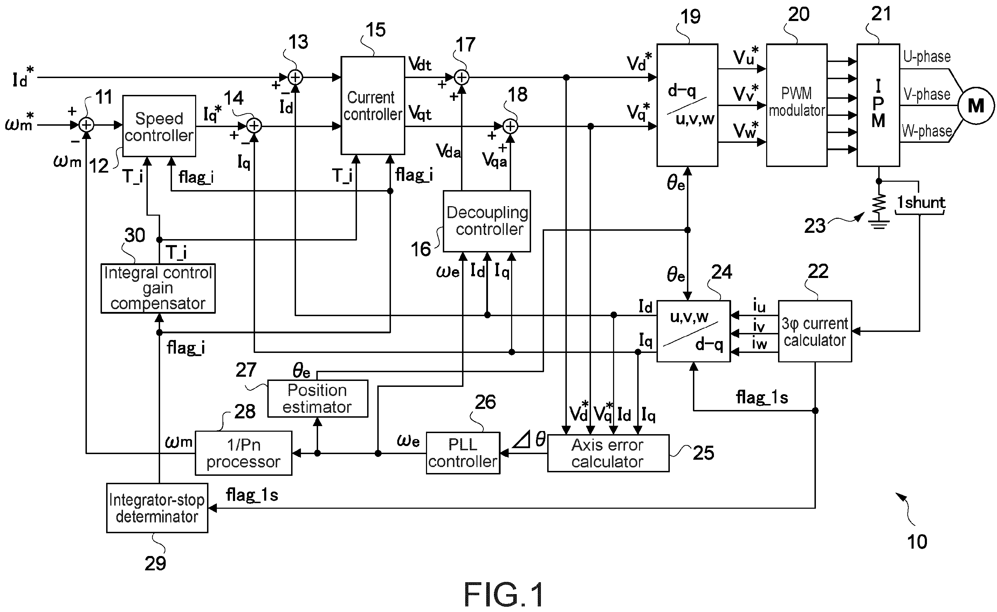

Fig. 1 is a diagram showing a configuration example of a motor control device according to an embodiment of the present invention.

A motor control device 10 includes subtractors 11, 13, and 14, a speed controller 12, a current controller 15, a decoupling controller 16, adders 17 and 18, a d-q/u,v,w converter 19, a PWM (Pulse Width Modulation) modulator 20, and an IPM (Intelligent Power Module) 21. The IPM 21 is connected to a motor M. Examples of the motor M include a PMSM (permanent magnet synchronous motor).

Further, the motor control device 10 includes a 3$\varphi$ current calculator 22, a shunt resistor 23, a u,v,w/d-q converter 24, an axis error calculator 25, a PLL (Phase Locked Loop) controller 26, a position estimator 27, a 1/Pn processor 28, an integrator-stop determinator 29, and an integral control gain compensator 30.

The subtractor 11 calculates an angular velocity deviation $\omega err$ by subtracting a mechanical-angle estimated angular velocity $\omega m$ that is the current estimated angular velocity output by the 1/Pn processor 28 from a mechanical-angular-velocity-command value $\omega m^*$ input to the motor control device 10 from the outside of the motor control device 10.

The speed controller 12 includes an integrator that performs integral control at intervals of a carrier period and stops performing the integral control in a carrier in which a detection current described below could not be detected. Further, the speed controller 12 includes a proportioner that performs proportional control at intervals of the carrier period, performs proportional control on the basis of the estimated current estimated by the 3$\varphi$ current calculator 22 in a carrier in which the detection current could not be detected, and performs the proportional control and the integral control on the basis of the detection current in a carrier in which the detection current could be detected. Note that although the speed controller 12 performs the proportional control and the integral control at intervals of the carrier period in this embodiment, the control period in which the proportional control and the integral control are performed (hereinafter, referred to also as a predetermined control period) is not limited thereto. For example, the proportional control and the integral control may be performed once every two carriers.

In this embodiment, the speed controller 12 adjusts a q-axis current command value Iq* in order to control the estimated angular velocity to an angular velocity command value on the basis of the angular velocity deviation $\omega err$ output by the subtractor 11 and a control time T_i described below output by the integral control gain compensator 30. Further, in this embodiment, the speed controller 12 performs the proportional control and the integral control or only the proportional control on the basis of an integral control execution flag flag_i indicating information regarding whether or not integral control is to be performed, which is determined by the integrator-stop determinator 29. Specifically, in the case where flag_i = TRUE, the speed controller 12 performs the proportional control and the integral control. Further, in the case where flag_i = FALSE, the speed controller 12 performs only the proportional control.

The subtractor 13 calculates a d-axis current error Id_err by subtracting a d-axis current Id output by the u,v,w/d-q converter 24 from a d-axis current command value Id* input to the motor control device 10 from the outside of the motor control device 10.

The subtractor 14 calculates a q-axis current error Iq_err by subtracting a q-axis current Iq output by the u,v,w/d-q converter 24 from the q-axis current command value Iq* output by the speed controller 12.

The current controller 15 includes an integrator that performs integral control at intervals of a carrier period and stops performing the integral control in a carrier in which a detection current could not be detected. Further, the current controller 12 includes a proportioner that performs proportional control at intervals of the carrier period, performs the proportional control on the basis of an estimated current estimated by the 3$\varphi$ current calculator 22 in a carrier in which the detection current could not be detected, and performs the proportional control and the integral control on the basis of the detection current in a carrier in which the detection current could be detected. Note that the current controller 15 performs the proportional control and the integral control at intervals of the carrier period in this embodiment, the control period in which the proportional control and the integral control are performed is not limited thereto. For example, the proportional control and the integral control may be performed once every two carriers.

In this embodiment, the current controller 15 adjusts a tentative d-axis voltage Vdt on the basis of the d-axis current error Id_err output by the subtractor 13, the control time T_i, and the integral control execution flag flag_i in order to bring the d-axis current Id of the drive component closer to the d-axis current command value Id*. Further, the current controller 15 adjusts a tentative q-axis voltage Vqt on the basis of the q-axis current error Iq_err output by the subtractor 14, the control time T_i, and the integral control execution flag flag_i in order to bring the q-axis current Iq of the drive component closer to the q-axis current command value Iq*.

In this embodiment, the current controller 15 performs the proportional control and the integral control or only the proportional control on the basis of the integral control execution flag flag_i. Specifically, in the case where flag_i = TRUE, the current controller 15 performs the proportional control and the integral control. Further, in the case where flag_i = FALSE, the current controller 15 performs only the proportional control.

The decoupling controller 16 performs decoupling control for cancelling the interference between d-axis current control and q-axis current control. Specifically, the decoupling controller 16 obtains, on the basis of an electrical-angle-estimated-angular-velocity ωe output by the PLL controller 26 and the d-axis current Id, a decoupling correction value Vda for decoupling the tentative d-axis voltage Vdt and outputs the obtained decoupling correction value Vda to the adder 17. Further, the decoupling controller 16 obtains, on the basis of the electrical-angle-estimated-angular-velocity ωe output by the PLL controller 26 and the q-axis current Iq, a decoupling correction value Vqa for decoupling the tentative q-axis voltage Vqt and outputs the obtained decoupling correction value Vqa to the adder 18.

The adder 17 calculates a d-axis voltage command value Vd* by adding the decoupling correction value Vda output by the decoupling controller 16 to the tentative d-axis voltage Vdt output by the current controller 15. Further, the adder 18 calculates a d-axis voltage command value Vq* by adding the decoupling correction value Vqa output by the decoupling controller 16 to the tentative q-axis voltage Vqt output by the current controller 15.

The d-q/u,v,w converter 19 converts the d-axis voltage command value Vd* output by the adder 17 and the q-axis voltage command value Vq* output by the adder 18 into a U-phase voltage command value Vu*, a V-phase voltage command value Vv*, and a W-phase voltage command value Vw* of three phases on the basis of an electrical angle phase θe indicating the current rotor position output by the position estimator 27.

The PWM modulator 20 outputs a six-phase PWM signal to the IPM 21 on the basis of the U-phase voltage command value Vu*, the V-phase voltage command value Vv*, the W-phase voltage command value Vw*, and the value of the DC voltage.

The IPM 21 receives a DC voltage for driving the motor M from a DC power source. Further, the IPM 21 converts, on the basis of the six-phase PWM signal output by the PWM modulator 20, the DC voltage into AC voltages to be applied to the U-phase, the V-phase, and the W-phase of the motor M and applies the AC voltages to the U-phase, the V-phase, and the W-phase of the motor M.

The 3φ current calculator 22 detects a bus current using the shunt resistor 23 and calculates a U-phase current value iu, a V-phase current value iv, and a W-phase current value iw of the motor M from the six-phase PWM switching information output by the PWM modulator 20 and the detected bus current.

Further, the 3φ current calculator 22 generates a current detectable flag flag_1s indicating information regarding whether or not a detection current could be detected. In this embodiment, the current detectable flag flag_1s is supplied to the u,v,w/d-q converter 24 and the integrator-stop determinator 29.

Here, the detection current refers to the U-phase current value iu, the V-phase current value iv, and the W-phase current value iw, which are motor currents of the motor M detected by being calculated by the 3φ current calculator 22.

Here, the bus current is a current that is detected using a resistor connected between the DC power source and the inverter (the PWM modulator 20 and the IPM 21). That is, in this embodiment, the bus current is a current that flows between the IPM 21 and the shunt resistor 23 and is detected by the shunt resistor 23 connected between the DC power source and the inverter.

The u,v,w/d-q converter 24 converts, on the basis of the electrical angle phase θe output by the position estimator 27, the U-phase current value iu, the V-phase current value iv, and the W-phase current value iw of three phases output by the 3φ current calculator 22 into the d-axis current Id and the q-axis current Iq of two phases.

In the case where a current can be detected in the one-shunt current detection method, i.e., flag_1s = TRUE, the U-phase current value iu, the V-phase current value iv, and the W-phase current value iw are converted into the d-axis current Id and the q-axis current Iq using the following formula (Math. 1).

[Math. 1]

$$\begin{bmatrix} i_d \\ i_q \end{bmatrix} = \sqrt{\frac{2}{3}} \begin{bmatrix} \left( i_u - \frac{1}{2} i_v - \frac{1}{2} i_w \right) \cos \theta_e + \left( \frac{\sqrt{3}}{2} i_v - \frac{\sqrt{3}}{2} i_w \right) \sin \theta_e \\ -\left( i_u - \frac{1}{2} i_v - \frac{1}{2} i_w \right) \sin \theta_e + \left( \frac{\sqrt{3}}{2} i_v - \frac{\sqrt{3}}{2} i_w \right) \cos \theta_e \end{bmatrix}$$

In the case where a current cannot be detected in the one-shunt current detection method, i.e., flag_1s = FALSE, the U-phase current value iu, the V-phase current value iv, and the W-phase current value iw that actually flow through the motor cannot be grasped accurately. For this reason, the u,v,w/d-q converter 24 estimates the current flowing through the motor M as the d-axis current Id and the q-axis current Iq of two phases (the following formula (Math. 2)) by calculating the average values of the d-axis current Id and the q-axis current Iq using an IIR filter on the basis of the d-axis current Id and the q-axis current Iq previously calculated using, for example, the formula (Math. 1).

[Math. 2]

$$\begin{bmatrix} i_d \\ i_q \end{bmatrix} = \begin{bmatrix} i_{d\_iir} \\ i_{q\_iir} \end{bmatrix}$$

Here, Id_iir and Iq_iir indicate values obtained by causing the d-axis current Id and the q-axis current Iq previously calculated using the formula (Math. 1) to pass through the IIR filter.

Note that although a method of estimating average values of the d-axis current Id and the q-axis current Iq as the d-axis current Id and the q-axis current Iq using the IIR filter has been described in this embodiment, for example, values obtained by adding load pulsation components to the above average values may be estimated as the d-axis current Id and the q-axis current Iq or the d-axis current Id and the q-axis current Iq may be estimated theoretically in accordance with the motor model formula of the motor M.

Vector control is performed using the d-axis current Id and the q-axis current Iq generated by either the method of the formula (Math. 1) or the formula (Math. 2).

The axis error calculator 25 calculates, on the basis of the d-axis voltage command value Vd* and the q-axis voltage command value Vq* output by the adders 17 and 18 and the d-axis current Id and the q-axis current Iq output by the u,v,w/d-q converter 24, an axis error $\Delta\theta$ indicating the difference between the estimated rotation axis and the actual rotation axis.

The PLL controller 26 calculates, on the basis of the axis error $\Delta\theta$ output by the axis error calculator 25, the electrical-angle-estimated-angular-velocity $\omega e$ that is the current estimated angular velocity of the motor M.

The position estimator 27 estimates the electrical angle phase $\theta e$ on the basis of the electrical-angle-estimated-angular-velocity $\omega e$ output by the PLL controller 26.

The 1/Pn processor 28 calculates the mechanical-angle estimated angular velocity $\omega m$ by dividing the electrical-angle-estimated-angular-velocity $\omega e$ output by the PLL controller 26 by the number of pole pairs Pn of the motor M.

The integrator-stop determinator 29 determines, on the basis of the current detectable flag flag_1s output by the 3φ current calculator 22, the integral control execution flag flag_i indicating whether or not integral control is to be performed. In this embodiment, the integrator-stop determinator 29 determines that flag_i = TRUE in the case where a current can be detected in the one-shunt current detection method (flag_1s = TRUE), and the integrator-stop determinator 29 determines that flag_i = FALSE in the case where a current cannot be detected in the one-shunt current detection method (flag_1s = FALSE. The generated integral control execution flag flag_i is output to the integral control gain compensator 30, the speed controller 12, and the current controller 15.

The integral control gain compensator 30 calculates the control time T_i on the basis of the integral control execution flag flag_i output by the integrator-stop determinator 29. Here, the control time T_i is the time from the carrier next to the carrier in which integral control was previously performed to the carrier in which integral control is performed this time. In this embodiment, in the case where integral control is to be performed (flag_1s = TRUE), the integral control gain compensator 30 calculates the control time T_i and initializes a control time integrated value T_integral. Here, the control time integrated value T_integral is the integrated value of the time from the carrier next to the carrier in which integral control was previously performed to the current carrier.

That is, in the case where integral control is to be performed, the integral control gain compensator 30 calculates the control time T_i using the following formula and then initializes the control time integrated value T_integral.

T_i= (1/fc) + T_integral

T_integral = 0

Here, fc indicates the carrier frequency and 1/fc indicates the carrier period, i.e., the time of one carrier.

Further, in the case where integral control is not to be performed (flag_1s = FALSE), the integral control gain compensator 30 accumulates the control time integrated value T_integral.

That is, in the case where integral control is not to be performed, the integral control gain compensator 30 accumulates the control time integrated value T_integral using the following formula.

T_integral = (1/fc) + T_integral

Note that in this embodiment, the 3φ current calculator 22 corresponds to a calculation unit that detects a bus current of the inverter using a resistor connected between the DC power source and the inverter and calculates, on the basis of the bus current, a motor current flowing through the motor at intervals of a predetermined control period.

Note that in this embodiment, the u,v,w/d-q converter 24 functions as an estimation unit that estimates the motor current flowing through the motor M. Further, the d-axis current Id and the q-axis current Iq estimated by the u,v,w/d-q converter 24 correspond to an estimated current.

Note that in this embodiment, the axis error calculator 25, the PLL controller 26, and the 1/Pn processor 28 function as a speed estimation unit that estimates a motor speed on the basis of a detection current that is a motor current detected by being calculated by the calculation unit.

Note that in this embodiment, the speed controller 12 and the current controller 15 function as a current control unit that controls the motor current such that the speed estimated by the speed estimation unit is a command speed.

Note that in this embodiment, the carrier period corresponds to a predetermined control period.

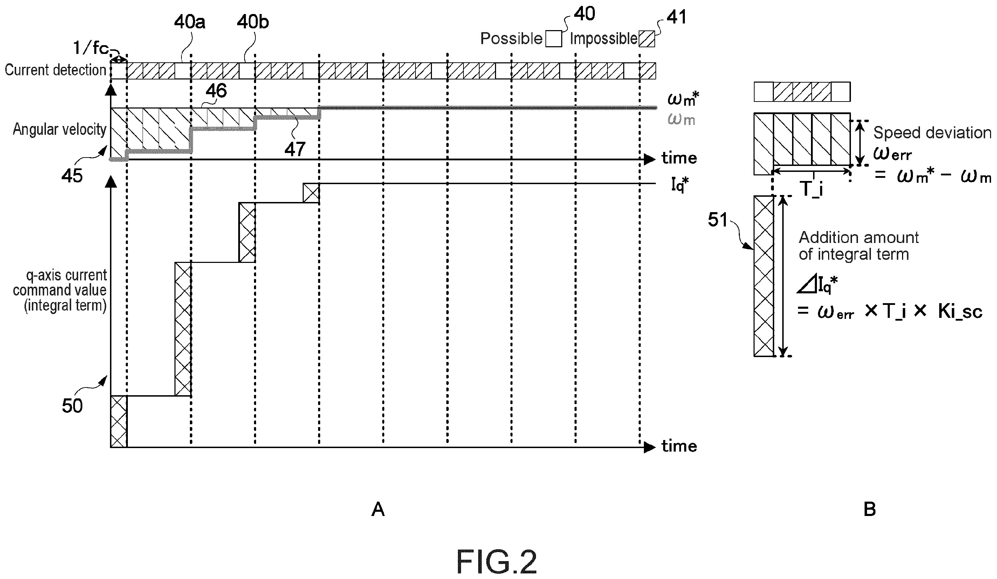

Fig. 2 is a diagram schematically showing a control response when integral control is performed and stopped. Part A of Fig. 2 is a diagram schematically showing a control response in a carrier in which the detection current could be detected and a carrier in which the detection current could not be detected. Part B of Fig. 2 is a diagram schematically showing an integral term in each carrier.

As shown in Part A of Fig. 2, a carrier 40 in which the detection current could be detected and a carrier 41 in which the detection current could not be detected are illustrated. Part A of Fig. 2 shows an example of the case where the 3φ current calculator 22 generates flag_1s = TRUE (carrier 40 in which the detection current could be detected) once every four times and generates flag_1s = FALSE (carrier 41 in which the detection current could not be detected) the other third times of the four times.

In this embodiment, a carrier (40a) in which the detection current could be detected at the first time will be referred to as a carrier in which the detection current could be detected previously, and a carrier (40b) in which the detection current could be detected at the second time will be referred to as a carrier in which the detection current could be detected this time. Further, the section from the carrier in which the detection current could be detected previously to the carrier in which the detection current could be detected this time will be referred to as a predetermined section in some cases.

The speed controller 12 performs proportional control and integral control in the carrier 40 in which the detection current could be detected. Further, the speed controller 12 stops performing the integral control and performs only the proportional control in the carrier 41 in which the detection current could not be detected.

In the case where integral control is to be performed (flag_i = TRUE), the angular velocity deviation ωerr is calculated using the following formula.

$$\omega err = \omega m^* - \omega m$$

Further, the q-axis current command value Iq* is calculated using the following formula. Note that Kp_sc indicates a speed controller proportional gain (constant).

$$Iq^* = (Kp\_sc \times \omega err) + Integrated\_value$$

Here, Integrated_value indicates an integral term that is a term determined by the integral control, of the proportional control and the integral control, and is calculated using the following formula. Note that Ki_sc indicates a speed controller integral gain (constant).

Integrated_value = (ωerr × Ki_sc × T_i) + Integrated_value

Note that (werr × Ki_sc×T_i) in the above formula indicates the addition amount of an integral term and is referred to as ΔIq* in some cases in the following description.

In the case where integral control is not to be performed (flag_i = FALSE), the angular velocity deviation ωerr is calculated using the following formula.

$$\omega err = \omega m^* - \omega m$$

Further, the q-axis current command value Iq* is calculated using the following formula.

$$Iq^* = (Kp\_sc \times \omega err) + Integrated\_value$$

Further, Integrated _value is calculated using the following formula.

$$\texttt{Integrated\_value = Integrated\_value}$$

As can be seen from the above formula, in the case where flag_i = FALSE, $\omega$err $\times$ Ki_sc$\times$ T_i is not added to the integral term. That is, this means that the execution of the integral control is stopped.

When the formulae of $\omega$err, Integrated_value, and Iq* calculated by the speed controller 12 are shown in a figure, a graph 45 of the angular velocity and a graph 50 of the q-axis current command value (integral term) are illustrated as shown in Part A of Fig. 2.

In the graph 45, the vertical axis indicates the angular velocity and the horizontal axis indicates the time. Further, in the graph 45, the mechanical-angular-velocity-command value $\omega$m* (line 46) that is a target value of the mechanical-angle estimated angular velocity $\omega$m and the mechanical-angle estimated angular velocity $\omega$m (line 47) in which the angular velocity increases at intervals of the carrier 40 in which the detection current could be detected are illustrated. That is, the angular velocity deviation $\omega$err indicates the difference between the angular velocities indicated by the line 46 and the line 47.

As shown in the graph 45, since the integral control is not performed in the carrier 41 in which the detection current could not be detected, the control time integrated value T_integral is accumulated. Further, in the carrier 40 in which the detection current could be detected, the control time T_i is calculated.

In the graph 50, the vertical axis indicates the q-axis current command value (integral term) and the horizontal axis indicates the time. In the graph 50, $\Delta$Iq* that is the addition amount of the integral term is expressed by the longitudinal length of a rectangle 51. As shown in the graph 50 of Part A of Fig. 2, $\Delta$Iq* is calculated at intervals of the carrier in which the detection current could be detected, and the q-axis current command value Iq* is adjusted such that the mechanical-angle estimated angular velocity $\omega$m is brought closer to the mechanical-angular-velocity-command value $\omega$m* by adding each $\Delta$Iq*.

In the case where integral control is to be performed, the current controller 15 performs the proportional control and the integral control. Here, the d-axis current error Id_err output by the subtractor 13 is calculated using the following formula.

$$\texttt{Id\_err = Id}^* \texttt{ - Id}$$

Further, Integrated_value is calculated using the following formula. Here, Ki_cc_d indicates a d-axis current controller integral gain (constant).

Integrated_value = (Id_err $\times$ Ki_cc_d $\times$ T_i) + Integrated_value

Note that (Id_err $\times$ Ki_cc_d $\times$ T_i) in the above formula is the addition amount of the integral term.

Further, the tentative d-axis voltage Vdt is calculated using the following formula. Here, Kp_cc_d indicates a d-axis current controller proportional gain (constant).

$$\texttt{Vdt = (Kp\_cc\_d} \times \texttt{Id\_err) + Integrated\_value}$$

Similarly, the q-axis current error Iq_err output by the subtractor 14 is calculated using the following formula.

$$\texttt{Iq\_err= Iq}^* \texttt{ - Iq}$$

Further, Integrated_value is calculated using the following formula. Here, Ki_cc_q indicates a q-axis current controller integral gain (constant).

Integrated_value = (Id_err $\times$ Ki_cc_d $\times$ T_i) + Integrated_value

Note that (Iq_err $\times$ Ki_cc_q $\times$ T_i) in the above formula is the addition amount of the integral term.

Further, the tentative q-axis voltage Vqt is calculated using the following formula. Here, Kp_cc_q indicates a q-axis current controller proportional gain (constant).

$$Vqt = (Kp\_cc\_q \times Iq\_err) + Integrated\_value$$

In the case where integral control is not to be performed, the current controller 15 performs only the proportional control. Here, the d-axis current error Id_err output by the subtractor 13 is calculated using the following formula.

$$Id\_err = Id^* - Id$$

Further, Integrated _value is calculated using the following formula.

$$Integrated\_value = Integrated\_value$$

Further, the tentative d-axis voltage Vdt is calculated using the following formula.

$$Vdt = (Kp\_cc\_d \times Id\_err) + Integrated\_value$$

Similarly, the q-axis current error Iq_err output by the subtractor 14 is calculated using the following formula.

$$Iq\_err = Iq^* - Iq$$

Further, Integrated_value is calculated using the following formula.

$$Integrated\_value = Integrated\_value$$

Further, the tentative q-axis voltage Vqt is calculated using the following formula.

$$Vqt = (Kp\_cc\_q \times Iq\_err) + Integrated\_value$$

Further, in this embodiment, the speed controller 12 and the current controller 15 determine the control amount of integral control (addition amount in this embodiment) on the basis of the current-undetectable-control-period information (control time T_i in this embodiment) based on the carrier in which the detection current could not be detected. Specifically, the speed controller 12 and the current controller 15 increase the control amount of integral control as the current-undetectable-control-period information is a larger value.

Further, the speed controller 12 and the current controller 15 determine the control amount of integral control on the basis of the deviation (the angular velocity deviation ωerr, the d-axis current error Id_err, and the q-axis current error Iq_err in this embodiment) between the control parameter input to the integrator in the carrier in which the detection current could be detected (the mechanical-angle estimated angular velocity ωm, the d-axis current Id, and the q-axis current Iq in this embodiment) and the control target value (the mechanical-angular-velocity-command value ωm*, the d-axis current command value Id*, and the q-axis current command value Iq* in this embodiment), the current-undetectable-control-period information, and the integral gain (the speed controller integral gain, the d-axis current controller integral gain, and the q-axis current controller integral gain in this embodiment).

Further, the current-undetectable-control-period information is a value based on the carrier in which the detection current could not be detected in the predetermined section.

Further, the current-undetectable-control-period information is a value based on the time of the carrier in which the detection current could not be detected in the predetermined section.

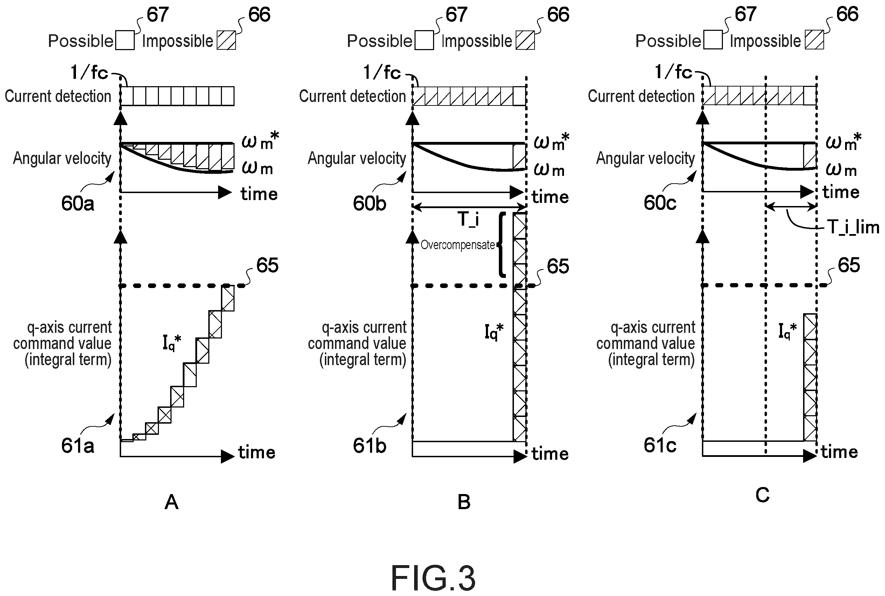

Fig. 3 is a diagram schematically showing a control method for the addition amount of an integral term.

Now, the problem that can occur in the case where the carrier in which a current cannot be detected continues for a long time will be described. If the carrier in which a current cannot be detected continues for a long time, the control time T_i increases, and thus, there is a possibility that the control becomes unstable because ΔIq* that is the addition amount of the integral term becomes too large.

Fig. 3 describes an example in which the control is prevented from becoming unstable by setting a predetermined upper limit value for ΔIq*. The mechanical-angle estimated angular velocity ωm during stable driving fluctuates substantially sinusoidally with respect to the mechanical-angular-velocity-command value ωm*. Fig. 3 describes an example of the q-axis current command value Iq* generated at a point between 180 to 270° of the sine wave.

Part A of Fig. 3 is a diagram showing an example of the case where a current could be detected in every carrier. In a graph 60a, the vertical axis indicates the angular velocity and the horizontal axis indicates the time. In a graph 61a, the vertical axis indicates the q-axis current command value and the horizontal axis indicates the time.

As shown in Part A of Fig. 3, in the case where a current can be detected in every carrier, the speed controller 12 performs the proportional control and the integral control for each carrier. The Iq* reached in this case is defined as an ideal value 65.

Part B of Fig. 3 is a diagram showing an example of the case where the predetermined upper limit value is not set. In a graph 60b, the vertical axis indicates the angular velocity and the horizontal axis indicates the time. In a graph 61b, the vertical axis indicates the q-axis current command value and the horizontal axis indicates the time.

In Part B of Fig. 3, assumption is made that a current could be detected after eight carriers 66 in which a current could not be detected. That is, in Part B of Fig. 3, the control time integrated value T_integral is accumulated in the eight carriers 66 in which a current could not be detected, and the control time T_i is the time corresponding to nine carriers including a carrier 67 in which a current could be detected. Then, ΔIq* is calculated by multiplying the angular velocity deviation ωerr and the speed controller integral gain Ki_sc in the carrier 67 in which a current could be detected and the control time T_i that is the time corresponding to nine carriers. That is, ΔIq* is calculated assuming that there was the angular velocity deviation ωerr in the carrier 67 in which a current could be detected in all eight carriers 66 in which a current could not be detected. Therefore, although the angular velocity deviation ωerr near the sine wave of 180° is small, it is regarded as a large angular velocity deviation ωerr near the sine wave of 270°, so that ΔIq* becomes excessive and the q-axis current command value Iq* is overcompensated.

As shown in the graph 61b, the q-axis current command value Iq* exceeds the ideal value 65 by being overcompensated.

Part C of Fig. 3 is a diagram showing an example of the case where a predetermined upper limit value is set. In a graph 60c, the vertical axis indicates the angular velocity and the horizontal axis indicates the time. In a graph 61c, the vertical axis indicates the q-axis current command value and the horizontal axis indicates the time.

In Part C of Fig. 3, assumption is made that a current could be detected after eight carriers 66 in which a current could not be detected, similarly to Part B of Fig. 3. In the example of Part C of Fig. 3, T_i_lim is set for the control time T_i as the upper limit value. In this embodiment, T_i_lim is the time including three carriers 66 in which a current could not be detected and one carrier 67 in which a current could be detected.

In the case where the control time T_i calculated by the integral control gain compensator 30 is T_i_lim or more (T_i ≥ T_i_lim), the control time T_i is limited to be equal to T_i_lim. Further, in the case where the control time T_i is smaller than T_i_lim (T_i < T_i_lim), the control time T_i is not limited and is used as it is. That is, in the example of Part C of Fig. 3, the control time T_i is first calculated as the time including the eight carriers 66 in which a current could not be detected and the one carrier 67 in which a current could be detected, but is limited to be equal to T_i_lim. Therefore, it is determined as the time including the three carriers 66 in which a current could not be detected and the one carrier 67 in which a current could be detected.

Note that T_i_lim may be arbitrarily set. For example, it may be set as 1 / (maximum mechanical angular rotation speed [rps] × 10). Specifically, in the case where the maximum mechanical angular rotation speed is 140 rps, T_i_lim = 1 / (140 × 10) = 0.7143 [ms].

By setting T_i_lim as the upper limit value of the control time T_i in this way, a predetermined upper limit value is set for the q-axis current command value Iq*.

As a result, the q-axis current command value Iq* is controlled so as not to exceed the ideal value 65. As a result, it is possible to prevent the addition amount from becoming excessive due to the influence of the deviation in the carrier in which a current could be detected and ensure an appropriate control response.

[Effects of first embodiment]

As described above, according to this embodiment, in a case where the detection current cannot be detected, the integral control of the integrator that performs the integral control is stopped on the basis of the detection current. This stops the integral control in the carrier where a current could not be detected, thereby preventing the control from becoming unstable and allowing the control of a motor to be stably performed.

Further, according to this embodiment, the motor control device 10 includes an estimation unit that estimates a motor current flowing through the motor M. Further, the speed controller 12 and the current controller 15 include a proportioner that performs proportional control at intervals of a predetermined control period, perform the proportional control on the basis of an estimated current estimated by the estimation unit in a control period in which a detection current could not be detected, and perform the proportional control and the integral control on the basis of the detection current in a control period in which the detection current could be detected. As a result, the proportional control is performed in the control period in which a current could not be detected, which enables an excellent control response.

Further, according to this embodiment, since the speed controller 12 and the current controller 15 determine the control amount of integral control on the basis of current-undetectable-control-period information based on the control period in which a detection current could not be detected, an excellent control response is possible even if there are many control periods in which the detection current could not be detected.

Further, according to this embodiment, the current-undetectable-control-period information is a larger value as the number of control periods in which the detection current could not be detected increases in a predetermined section, and the speed controller 12 and the current controller 15 increase the control amount of integral control as the current-undetectable-control-period information is a larger value. This enables an excellent control response even if there are many control periods in which a detection current could not be detected.

Further, according to this embodiment, the speed controller 12 and the current controller 15 determine the control amount of integral control on the basis of a deviation between a control parameter input to the integrator in a control period in which the detection current could be detected and a control target value, the current-undetectable-control-period information, and an integral gain. As a result, determining the control amount on the basis of the latest deviation enables an excellent control response.

Further, according to this embodiment, the control amount has a predetermined upper limit value. As a result, it is possible to prevent the control amount from becoming excessive due to the influence of the latest deviation and enable an appropriate control response.

Further, according to this embodiment, the predetermined section is a section from a control period in which the detection current could be detected previously to a control period in which the detection current could be detected this time, and the current-undetectable-control-period information is a value based on a control period in which the detection current could not be detected in the predetermined section. This enables an excellent control response even if there are many control periods in which a detection current could not be detected.

Further, according to this embodiment, the current-undetectable-control-period information is a value based on a time of the control period in which the detection current could not be detected in the predetermined section. This allows the control amount to be appropriately determined even in the case where a control period is made variable for the purpose of noise control or the like.

<Second embodiment>

Subsequently, a second embodiment of the present invention will be described. In this embodiment, another control example of the integral control gain compensator 30 will be described. Note that the components corresponding to those in the above-mentioned first embodiment will be denoted by the same reference symbols and detailed description thereof will be omitted.

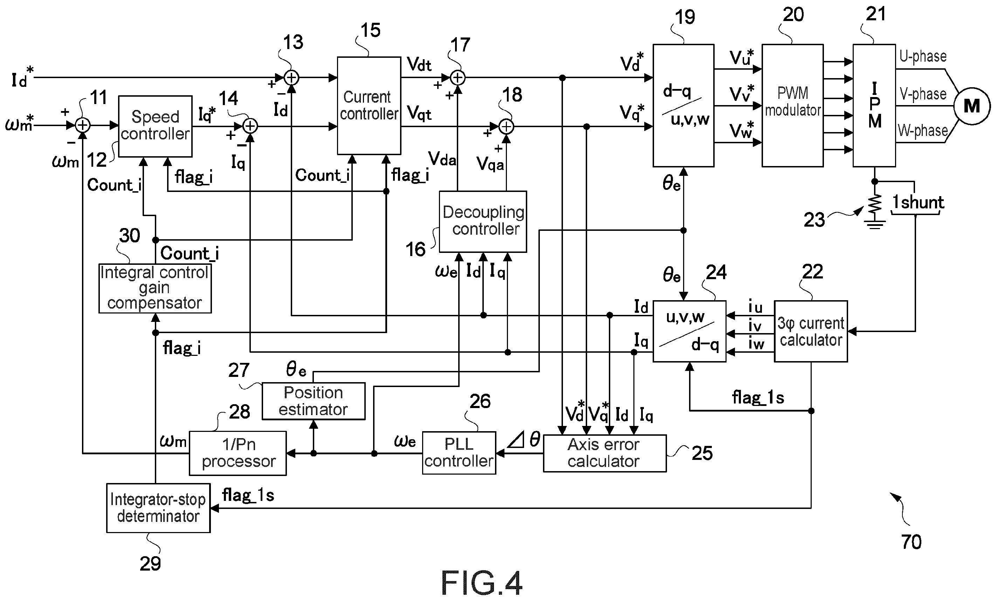

Fig. 4 is a diagram showing a configuration example of a motor control device 70 according to this embodiment.

The integral control gain compensator 30 in Fig. 4 calculates a carrier count value Count_i on the basis of the integral control execution flag flag_i by the integrator-stop determinator 29. Here, the carrier count value Count_i is the number of carriers from the carrier next to the carrier in which integral control was previously performed to the carrier in which the integral control is performed this time.

Specifically, in the case where integral control is to be performed (flag_i = TRUE), the integral control gain compensator 30 calculates the carrier count value Count_i. Further, the integral control gain compensator 30 initializes an accumulated carrier value Count_integral. Here, the accumulated carrier value Count_integral is the integrated value of the number of carriers from the carrier next to the carrier in which integral control was previously performed to the current carrier.

That is, in the case where integral control is to be performed, the integral control gain compensator 30 calculates the following formula.

$$Count\_i = 1 + Count\_integral$$

$$Count\_integral = 0$$

Further, in the case where integral control is not to be performed (flag_1s = FALSE), the integral control gain compensator 30 accumulates the accumulated carrier value Count_integral. In the case where integral control is not to be performed, Count_integral is calculated using the following formula.

$$Count\_integral = 1 + Count\_integral$$

As shown in Fig. 4, Count_i output by the integral control gain compensator 30 is output to the speed controller 12 and the current controller 15.

In the case where integral control is to be performed, the speed controller 12 performs the proportional control and the integral control. In this embodiment, the speed controller 12 corrects an integral gain (hereinafter, referred to as gain) on the basis of Count_i output by the integral control gain compensator 30.

gain is calculated using the following formula.

$$\texttt{gain = Ki\_sc × Count\_i}$$

Further, Integrated _value is calculated using the following formula.

$$\texttt{Integrated\_value =(\omega err × gain × (1 / fc)) +}$$
$$\texttt{Integrated\_value}$$

Note that ($\omega$err $\times$ gain $\times$ (1 / fc)) in the above formula is the addition amount of the integral term.

The q-axis current command value Iq* is calculated using the following formula.

$$\texttt{Iq}^* \texttt{ = (Kp\_sc × \omega err) + Integrated\_value}$$

In the case where integral control is not to be performed, the speed controller 12 stops performing the integral control and performs only the proportional control. Note that the calculation is omitted because it is similar to the formula for the speed controller 12 described in the first embodiment.

In the case where integral control is to be performed, the current controller 15 performs the proportional control and the integral control. In this embodiment, the current controller 15 corrects an integral gain (gain) on the basis of Count_i.

gain is calculated using the following formula.

$$\texttt{gain = Ki\_cc\_d × Count\_i}$$

Further, Integrated _value is calculated using the following formula.

$$\texttt{Integrated\_value = (Id\_err × gain × (1 / fc)) +}$$
$$\texttt{Integrated\_value}$$

Note that (Id _err $\times$ gain $\times$ (1 / fc)) in the above formula is the addition amount of the integral term.

Further, the tentative d-axis voltage Vdt is calculated using the following formula.

$$\texttt{Vdt = (Kp\_cc\_d × Id\_err) + Integrated\_value}$$

The q-axis also calculated similarly using the following formula.

$$\texttt{gain = Ki\_cc\_q × Count\_i}$$

Integrated_value = (Iq_err $\times$ gain $\times$ (1 /fc) ) + Integrated_value

$$\texttt{Vqt = (Kp\_cc\_q × Iq\_err) + Integrated\_value}$$

Note that (Iq_err $\times$ gain $\times$ (1 / fc)) in the above formula is the addition amount of the integral term.

In the case where integral control is not to be performed, the current controller 15 stops performing the integral control and performs only the proportional control. Note that the calculation is omitted because it is similar to the formula for the current controller 15 described in the first embodiment.

[Effects of second embodiment]

As described above, according to the second embodiment, the predetermined section is a section from the carrier in which the detection current could be detected previously to the carrier in which the detection current could be detected this time, and the current-undetectable-control-period information (carrier count value Count_i in this embodiment) is a value based on the carrier in which the detection current could not be detected in the predetermined section. This enables an excellent control response even if there are many carriers in which a current could not be detected.

<Third embodiment>

Subsequently, a third embodiment of the present invention will be described. In this embodiment, another control example of the integral control gain compensator 30 will be described. Note that the components corresponding to those in the above-mentioned first embodiment will be denoted by the same reference symbols and detailed description thereof will be omitted.

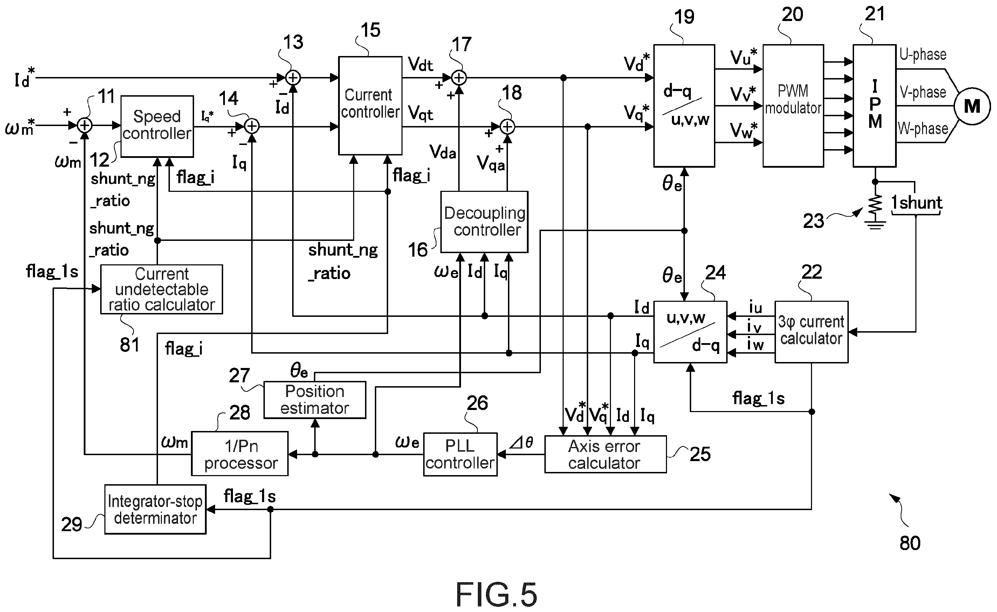

Fig. 5 is a diagram showing a configuration example of a motor control device 80 according to this embodiment.

The motor control device 80 according to this embodiment includes a current undetectable ratio calculator 81.

The current undetectable ratio calculator 81 calculates a current undetectable ratio shunt_ng_ratio indicating the ratio of the carrier in which the detection current could not be detected in the predetermined section. For example, the current undetectable ratio calculator 81 calculates shunt_ng_ratio using a filter or the like on the basis of the current detectable flag flag_1s output by the 3φ current calculator 22.

For example, in the case where the IIR filter is used to calculate shunt_ng_ratio, shunt_ng_ratio is calculated from the following formula.

shunt_ng_ratio = ( (shunt_ng_ratio $\times$ (N - 1) ) + input) / N

Here, N is the number of carriers that means the section for calculating shunt_ng_ratio and is set to an arbitrary value obtained by experiment in advance. Further, for example, it may be set taking into account the response speed of the current controller, or the like.

Further, input is an input value of the IIR filter, and the current undetectable ratio calculator 81 inputs 1 to input in the case where a current can be detected and inputs 0 to input in the case where a current cannot be detected.

As shown in Fig. 5, shunt_ng_ratio output by the current undetectable ratio calculator 81 is output to the speed controller 12 and the current controller 15.

In the case where integral control is to be performed, the speed controller 12 performs the proportional control and the integral control. In this embodiment, the speed controller 12 corrects an integral gain (gain) on the basis of shunt_ng_ratio output by the current undetectable ratio calculator 81.

gain is calculated using the following formula.

$$\mathtt{gain\ =\ Ki\_sc\ \times\ (1\ /\ (1\ -\ shunt\_ng\_ratio))}$$

Further, Integrated _value is calculated using the following formula.

Integrated_value = (ωerr $\times$ gain $\times$ (1 / fc) ) + Integrated_value

Note that (ωerr $\times$ gain $\times$ (1 / fc)) in the above formula is the addition amount of the integral term.

The q-axis current command value Iq* is calculated using the following formula.

$$\mathtt{Iq^*\ =\ (Kp\_sc\ \times\ \omega err)\ +\ Integrated\_value}$$

As described above, in this embodiment, the integral gain, and therefore the addition amount of the integral term, is calculated on the basis of shunt_ng_ratio in the carrier in which integral control is performed. Therefore, in the carrier in which integral control is performed, the predetermined section is a section from the carrier in which a detection current could be detected to the carrier N carriers before.

In the case where integral control is not to be performed, the speed controller 12 sops performing the integral control and performs only the proportional control. Note that the calculation is omitted because it is similar to the formula for the speed controller 12 described in the first embodiment.

In the case where integral control is to be performed, the current controller 15 performs the proportional control and the integral control. In this embodiment, the current controller 15 corrects an integral gain (gain) on the basis of shunt_ng_ratio.

gain is calculated using the following formula.

$$\texttt{gain = Kp\_cc\_d} \times \texttt{(1 / (1 - shunt\_ng\_ratio))}$$

Further, Integrated _value is calculated using the following formula.

Integrated_value = (Id_err $\times$ gain $\times$ (1 / fc) ) + Integrated_value

Note that (Id _err $\times$ gain $\times$ (1 / fc)) in the above formula is the addition amount of the integral term.
Further, the tentative d-axis voltage Vdt is calculated using the following formula.

$$\texttt{Vdt = (Kp\_cc\_d} \times \texttt{Id\_err) + Integrated\_value}$$

The q-axis is also calculated similarly using the following formula.

$$\texttt{gain = Ki\_cc\_q} \times \texttt{(1 / (1 - shunt\_ng\_ratio))}$$

Integrated_value = (Iq_err $\times$ gain $\times$ (1 / fc) ) + Integrated_value

$$\texttt{Vqt = (Kp\_cc\_q} \times \texttt{Iq\_err) + Integrated\_value}$$

Note that (Iq_err $\times$ gain $\times$ (1 / fc)) in the above formula is the addition amount of the integral term.
In the case where integral control is not to be performed, the current controller 15 stops performing the integral control and performs only the proportional control. Note that the calculation is omitted because it is similar to the formula for the current controller 15 described in the first embodiment.

[Effects of third embodiment]

As described above, according to a third embodiment, the predetermined section is a predetermined time with reference to the control period in which a detection current could be detected this time, and the current-undetectable-control-period information (current undetectable ratio shunt_ng_ratio in this embodiment) is a value based on a ratio of the control period in which a detection current could not be detected in the predetermined section. This enables an excellent control response even if there are many control periods in which a current could not be detected.
In the third embodiment, an example in which the integral gain is corrected on the basis of the ratio of the control period in which a current could not be detected in the predetermined section has been described. The present invention is not limited thereto, and for example, the integral gain may be corrected on the basis of the ratio of the control period in which a current could be detected in the predetermined section.
Although embodiments of the present invention have been described above, it goes without saying that the present invention is not limited to the above-mentioned embodiments and various modifications can be made. For example, the above first embodiment, second embodiment, and third embodiment may be combined.
A control example in a state where the modulation ratio is smaller than 100% has been described in the above embodiments. The present invention is not limited thereto, and the above control may be performed also in an overmodulation control region in an overmodulation state where the modulation ratio is 100% or more. For example, the speed controller 12 and the current controller 15 may stop performing the integral control in a carrier in which a detection current cannot be detected in the overmodulation control region. This enables an excellent control response in the overmodulation region where the number of carriers in which a current could not be detected increases.

Reference Signs List

10    motor control device

| 12 | speed controller |
| 15 | current controller |
| 29 | integrator-stop determinator |
| 30 | integral control gain compensator |
| 81 | current undetectable ratio calculator |

**Claims**

1. A motor control device, comprising:

   an inverter that converts a direct current (DC) voltage supplied from a DC power source into an alternating current (AC) voltage and applies the AC voltage to a motor by PWM control;
   a calculation unit that detects a bus current of the inverter using a resistor connected between the DC power source and the inverter and calculates, on a basis of the bus current, a motor current flowing through the motor at intervals of a predetermined control period;
   a speed estimation unit that estimates a motor speed on a basis of a detection current that is a motor current detected by being calculated by the calculation unit; and
   a current control unit that controls the motor current such that the speed estimated by the speed estimation unit is a command speed,
   the current control unit including an integrator that performs integral control at intervals of the predetermined control period and stopping performing the integral control in a control period in which the detection current could not be detected.

2. The motor control device according to claim 1, further comprising

   an estimation unit that estimates the motor current flowing through the motor,
   the current control unit

   including a proportioner that performs proportional control at intervals of the predetermined control period,
   performing the proportional control on a basis of an estimated current estimated by the estimation unit in a control period in which the detection current could not be detected, and
   performing the proportional control and the integral control on a basis of the detection current in a control period in which the detection current could be detected.

3. The motor control device according to claim 1, wherein
   the current control unit determines a control amount of the integral control on a basis of current-undetectable-control-period information based on a control period in which the detection current could not be detected.

4. The motor control device according to claim 3, wherein

   the current-undetectable-control-period information is a larger value as the number of control periods in which the detection current could not be detected increases in a predetermined section, and
   the current control unit increases the control amount of the integral control as the current-undetectable-control-period information is a larger value.

5. The motor control device according to claim 3, wherein
   the current control unit determines the control amount of the integral control on a basis of a deviation between a control parameter input to the integrator in a control period in which the detection current could be detected and a control target value, the current-undetectable-control-period information, and an integral gain.

6. The motor control device according to claim 5, wherein
   the control amount has a predetermined upper limit value.

7. The motor control device according to claim 4, wherein

   the predetermined section is a section from a control period in which the detection current could be detected previously to a control period in which the detection current could be detected this time, and
   the current-undetectable-control-period information is a value based on a control period in which the detection current could not be detected in the predetermined section.

8.  The motor control device according to claim 7, wherein
    the current-undetectable-control-period information is a value based on a time of the control period in which the detection current could not be detected in the predetermined section.

9.  The motor control device according to claim 4, wherein

    the predetermined section is a predetermined time with reference to a control period in which the detection current could be detected this time, and
    the current-undetectable-control-period information is a value based on a ratio of the control period in which the detection current could not be detected in the predetermined section.

10. The motor control device according to claim 1, wherein
    the current control unit stops performing the integral control in a control period in which the detection current could not be detected in an overmodulation control region.

FIG.1

## FIG.2

**B**

Speed deviation $\omega_{err} = \omega_m{}^* - \omega_m$

$T\_i$

Addition amount of integral term

$\Delta Iq^* = \omega_{err} \times T\_i \times Ki\_sc$

51

**A**

41

40

Possible ☐ Impossible ▨

Current detection

1/fc

40a 40b

$\omega_m{}^*$ $\omega_m$

time

Angular velocity

45 46 47

$Iq^*$

time

q-axis current command value (integral term)

50

FIG.3

**A**

67 ~ Possible □  66 ~ Impossible ▨

1/fc
Current detection

60a
Angular velocity  $\omega^*_m$  $\omega_m$  time

65
61a
q-axis current command value (integral term)  $I_q^*$  time

**B**

67 ~ Possible □  66 ~ Impossible ▨

1/fc
Current detection

60b
Angular velocity  $\omega^*_m$  $\omega_m$  time

T_i
Overcompensate

65
61b
q-axis current command value (integral term)  $I_q^*$  time

**C**

67 ~ Possible □  66 ~ Impossible ▨

1/fc
Current detection

60c
Angular velocity  $\omega^*_m$  $\omega_m$  time

T_i_lim

65
61c
q-axis current command value (integral term)  $I_q^*$  time

**FIG.4**

M

U-phase
V-phase
W-phase

21 — IPM
20 — PWM modulator
19 — d-q / u,v,w
22 — 3φ current calculator
23 — 1shunt
24 — u,v,w / d-q
25 — Axis error calculator
26 — PLL controller
27 — Position estimator
28 — 1/Pn processor
29 — Integrator-stop determinator
30 — Integral control gain compensator
15 — Current controller
16 — Decoupling controller
11 — Speed controller
12 — Integral control gain compensator

$V_u^*$, $V_v^*$, $V_w^*$

$V_d^*$, $V_q^*$

$\theta_e$

i u, i v, i w

flag_1s

Id, Iq

$V_d^*$ $V_q^*$ Id Iq

$\Delta\theta$

$\omega_e$

$\theta_e$

$\omega_m$

flag_1s

flag_i

Count_i

$V_{dt}$, $V_{qt}$

$V_{da}$, $V_{qa}$

$\omega_e$ Id Iq

Id

Iq

$I_d^*$

$I_q^*$

$\omega_m^*$

$\omega_m$

13, 14, 17, 18

70

20

FIG.5

## INTERNATIONAL SEARCH REPORT

| International application No. |
| :--- |
| **PCT/JP2023/035337** |

**A.    CLASSIFICATION OF SUBJECT MATTER**

*H02P 21/24*(2016.01)i; *H02P 27/08*(2006.01)i
   FI:   H02P21/24; H02P27/08

According to International Patent Classification (IPC) or to both national classification and IPC

**B.    FIELDS SEARCHED**

Minimum documentation searched (classification system followed by classification symbols)

   H02P21/24; H02P27/08

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| :---: | :--- | :---: |
| A | JP 2000-050419 A (MATSUSHITA ELECTRIC WORKS LTD) 18 February 2000 (2000-02-18)<br>        paragraphs [0013]-[0030], fig. 1 | 1-10 |
| A | JP 2011-067023 A (HITACHI APPLIANCES INC) 31 March 2011 (2011-03-31)<br>        paragraphs [0018]-[0042] | 1-10 |
| A | JP 2002-247876 A (MITSUBISHI ELECTRIC CORP) 30 August 2002 (2002-08-30)<br>        paragraphs [0097]-[0098], fig. 6, 16 | 1-10 |

☐ Further documents are listed in the continuation of Box C.    ☑ See patent family annex.

| | |
| :--- | :--- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| :--- | :--- |
| **29 November 2023** | **12 December 2023** |

| Name and mailing address of the ISA/JP | Authorized officer |
| :--- | :--- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/035337**

| Patent document cited in search report | | | Publication date (day/month/year) | Patent family member(s) | | | Publication date (day/month/year) |
|---|---|---|---|---|---|---|---|
| JP | 2000-050419 | A | 18 February 2000 | (Family: none) | | | |
| JP | 2011-067023 | A | 31 March 2011 | CN | 102023251 | A | |
| | | | | KR | 10-2011-0030304 | A | |
| JP | 2002-247876 | A | 30 August 2002 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015126555 A
- JP 2015192497 A